# EUROPEAN PATENT APPLICATION

(11) **EP 4 779 563 A1**
(43) Date of publication of application: **22.07.2026**
(21) Application number: 26151937.5
(22) Date of filing: 14.01.2026
(51) Int. Cl.: G06T 7/11, G06V 10/44

(54) **METHOD AND SYSTEM TO MAP WATER BOUNDARIES FROM LIDAR DATA**

(30) Priority: 15.01.2025 US 202563745516 P
(71) Applicant: Xeos Imaging Inc., Québec, QC G1P 4P5 (CA)
(72) Inventor: NGUYEN, Van Tho, Québec (Québec) G1P 4P5 (CA); ST-PIERRE, Tony, Québec (Québec) G1P 4P5 (CA)
(74) Representative: Bandpay & Greuter

(57) **Abstract**

The approach disclosed herein allows mapping water boundary using only LiDAR data and geometric analysis. It has the same benefits as approaches combining LiDAR with orthophotography, including mapping water boundaries beneath treetops and bridges, and avoids rasterization, thereby avoiding loss of resolution. The approach includes receiving a LiDAR point cloud representing a surface area including the water boundary, segmenting the LiDAR point cloud, defining a plurality of contours associated with subsets of the LiDAR points assigned to one class, defining a waterbody candidate region based on the contours, computing a topological relation between the waterbody candidate regions and contours to create a set of topological relations for each waterbody candidate region, and determining whether each waterbody candidate region corresponds to a waterbody based on the corresponding set of topological relations to generate a water boundary mapping.

## Description

### TECHNICAL FIELD

The technical field relates to surveying, and more specifically to systems and methods for mapping water boundaries from LiDAR (Light Detection And Ranging) data.

### BACKGROUND

Semantic segmentation using deep learning on aerial images (photographic or satellite) can be considered relatively mature. However, the information extracted from two-dimensional data is subject to occlusion errors. For example, a watercourse may disappear in whole or in part beneath the treetops overhanging on top of it.

On the other hand, aerial LiDAR data can be used to obtain points under the canopy. However, it is common to obtain a low density of LiDAR points on the water surface due, for example, to the reflective effect of the water. The water surface data obtained by LiDAR is therefore generally incomplete. Consequently, in places where there is a lack of surface data in a LiDAR point cloud, it is unfortunately not possible to know whether the corresponding surface represents a water surface or not. Precise mapping of the water boundary by the water points of a LiDAR alone may therefore prove inaccurate in many places.

Combining the LiDAR point cloud with an orthophotography has been proposed to map the water boundary. Unfortunately, this approach requires rasterizing the point cloud, causing a loss in resolution. Moreover, it requires performing a semantic segmentation of the orthophotography, which is computationally complex and introduces an additional source of error.

There remains a need for accurate, high-resolution and computationally efficient solutions to map water boundaries based on LiDAR data.

### SUMMARY

The approach disclosed herein allows mapping water boundary using only LiDAR data and geometric analysis. It has the same benefits as approaches combining LiDAR with orthophotography, including mapping water boundaries beneath treetops and bridges, and avoids rasterization, thereby avoiding loss of resolution.

In one aspect, a method for performing water boundary mapping is provided. The method includes receiving a LiDAR point cloud including a plurality of LiDAR points, the LiDAR point cloud representing a surface area including the water boundary, segmenting the LiDAR point cloud into a segmented point cloud, the segmented point cloud including the LiDAR points and assigning one of a plurality of LiDAR classes to at least a subset of the LiDAR points, the LiDAR classes including at least a ground class, defining a plurality of contours, each contour from the plurality of contours being associated with a subset of the LiDAR points assigned to one of the plurality of LiDAR classes, defining at least one waterbody candidate region based on the contours, each of the at least one waterbody candidate region being a region including contours associated with a subset of the LiDAR points not assigned to the ground class, computing a topological relation between each waterbody candidate region and each contour, thereby creating a set of topological relations corresponding to each waterbody candidate region, determining whether each waterbody candidate region corresponds to a waterbody based on the corresponding set of topological relations, and generating the water boundary mapping based on the determination.

In another aspect, a system for performing water boundary mapping is provided. The system includes at least one aerial collection vehicle each equipped with at least one LiDAR optical transceiver, each LiDAR optical transceiver including at least a transmitter configured to send a laser beam towards an object and a receiver configured to detect a reflection of the laser beam on the object, the at least one LiDAR optical transceiver of the at least one aerial collection vehicle being configured to create point data based on the reflection of the beam, the point data corresponding to a LiDAR point cloud, a segmentation module configured to segment the LiDAR point cloud into a segmented point cloud, the segmented point cloud including the LiDAR points and assigning one of a plurality of LiDAR classes to at least a subset of the LiDAR points, the LiDAR classes including at least a ground class, the segmentation module including a neural network receiving the LiDAR point cloud as input and trained to output the corresponding segmented point cloud, and a boundary mapping module. The boundary mapping module is configured to define a plurality of contours, each contour from the plurality of contours being associated with a subset of the LiDAR points assigned to one of the plurality of LiDAR classes, define at least one waterbody candidate region based on the contours, each of the at least one waterbody candidate region being a region including contours associated with a subset of the LiDAR points not assigned to the ground class, compute a topological relation between each waterbody candidate region and each contour, thereby creating a set of topological relations corresponding to each waterbody candidate region, determine whether each waterbody candidate region corresponds to a waterbody based on the corresponding set of topological relations, and generate the water boundary mapping based on the determination.

In a further aspect, a method for performing water boundary mapping is provided. The method includes receiving a LiDAR point cloud including a plurality of LiDAR points, the LiDAR point cloud representing a surface area including the water boundary, segmenting the LiDAR point cloud into a segmented point cloud, the segmented point cloud including the LiDAR points and assigning one of a plurality of LiDAR classes to at least a subset of the LiDAR points, the LiDAR classes including at least a ground class, defining a plurality of contours, each contour from the plurality of contours being associated with a subset of the LiDAR points assigned to one of the plurality of LiDAR classes, defining at least one waterbody candidate region based on the contours, each of the at least one waterbody candidate region being a region including contours associated with a subset of the LiDAR points not assigned to the ground class, computing a topological relation between each waterbody candidate region and each contour, thereby creating a set of topological relations corresponding to each waterbody candidate region, determining whether each waterbody candidate region corresponds to a waterbody based on the corresponding set of topological relations and generating the water boundary mapping based on the determination.

In some embodiments, the method is computer-implemented.

In some embodiments, the method includes the step of acquiring the point cloud by at least one aerial collection vehicle each equipped with at least one LiDAR optical transceiver, each LiDAR optical transceiver including at least a transmitter configured to send a laser beam towards an object and a receiver configured to detect a reflection of the laser beam on the object, the at least one LiDAR optical transceiver of the at least one aerial collection vehicle being configured to create point data based on the reflection of the beam, the point data corresponding to the LiDAR point cloud.

In some embodiments, the contours define a corresponding plurality of contour polygons, each contour defining a corresponding contour polygon.

In some embodiments, each contour corresponds to a convex hull of the subset of the LiDAR points associated to the contour.

In some embodiments, each contour corresponds to a concave hull of the subset of the LiDAR points associated to the contour.

In some embodiments, each contour corresponds to an α-shape of the subset of the LiDAR points associated to the contour.

In some embodiments, the area defines an area polygon, and wherein a subtraction of the contour polygons associated with the ground class from the area polygon defines at least one waterbody candidate region.

In some embodiments, the LiDAR classes include a building class, wherein the area defines an area polygon, and wherein a subtraction of the contour polygons associated with the ground and building classes from the area polygon defines the at least one waterbody candidate region.

In some embodiments, all of the at least one waterbody candidate region are connected to one another.

In some embodiments, the plurality of LiDAR classes include a water class and non-water classes, the water class defines at least a subset of the plurality of contours named water contours and the non-water classes define at least a subset of the plurality of contours named non-water contours, and the set of topological relations includes at least an indication, for each respective waterbody candidate region from the at least one waterbody candidate region and for each respective contour of the plurality of contours, of whether the respective waterbody candidate region is included in the respective contour, of whether the respective contour is included in the respective waterbody candidate region, and of whether the respective waterbody candidate region and the respective contour overlap.

In some embodiments, determining whether each waterbody candidate region corresponds to a waterbody includes i. determining that each waterbody candidate region that includes at least one of the water contours corresponds to a waterbody, ii. determining that each waterbody candidate region remaining after step i that is included in one of the non-water contours does not correspond to a waterbody, and iii. determining that each waterbody candidate region remaining after step ii corresponds to a waterbody.

In some embodiments, the LiDAR classes include a bridge class, the bridge class defines at least a subset of the plurality of contours named bridge contours, and determining whether each waterbody candidate region corresponds to a waterbody includes, between steps i and ii, removing each waterbody candidate region remaining after step i that is included in one of the bridge contours.

In yet another aspect, a system for performing water boundary mapping is provided. The system includes at least one aerial collection vehicle each equipped with at least one LiDAR optical transceiver, each LiDAR optical transceiver including at least a transmitter configured to send a laser beam towards an object and a receiver configured to detect a reflection of the laser beam on the object, the at least one LiDAR optical transceiver of the at least one aerial collection vehicle being configured to create point data based on the reflection of the beam, the point data corresponding to a LiDAR point cloud, a segmentation module configured to segment the LiDAR point cloud into a segmented point cloud, the segmented point cloud including the LiDAR points and assigning one of a plurality of LiDAR classes to at least a subset of the LiDAR points, the LiDAR classes including at least a ground class, the segmentation module including a neural network receiving the LiDAR point cloud as input and trained to output the corresponding segmented point cloud, and a boundary mapping module configured to define a plurality of contours, each contour from the plurality of contours being associated with a subset of the LiDAR points assigned to one of the plurality of LiDAR classes, define at least one waterbody candidate region based on the contours, each of the at least one waterbody candidate region being a region including contours associated with a subset of the LiDAR points not assigned to the ground class, compute a topological relation between each waterbody candidate region and each contour, thereby creating a set of topological relations corresponding to each waterbody candidate region, determine whether each waterbody candidate region corresponds to a waterbody based on the corresponding set of topological relations, and generate the water boundary mapping based on the determination.

In some embodiments, the contours define a corresponding plurality of contour polygons, each contour defining a corresponding contour polygon.

In some embodiments, each contour corresponds to a convex hull of the subset of the LiDAR points associated to the contour.

In some embodiments, each contour corresponds to a concave hull of the subset of the LiDAR points associated to the contour.

In some embodiments, each contour corresponds to an α-shape of the subset of the LiDAR points associated to the contour.

In some embodiments, the area defines an area polygon, and wherein a subtraction of the contour polygons associated with the ground class from the area polygon defines at least one waterbody candidate region.

In some embodiments, the LiDAR classes include a building class, wherein the area defines an area polygon, and wherein a subtraction of the contour polygons associated with the ground and building classes from the area polygon defines the at least one waterbody candidate region.

In some embodiments, all of the at least one waterbody candidate region are connected to one another.

In some embodiments, the plurality of LiDAR classes include a water class and non-water classes, the water class defines at least a subset of the plurality of contours named water contours and the non-water classes define at least a subset of the plurality of contours named non-water contours, and the set of topological relations includes at least an indication, for each respective waterbody candidate region from the at least one waterbody candidate region and for each respective contour of the plurality of contours, of whether the respective waterbody candidate region is included in the respective contour, of whether the respective contour is included in the respective waterbody candidate region, and of whether the respective waterbody candidate region and the respective contour overlap.

In some embodiments, determining whether each waterbody candidate region corresponds to a waterbody includes i. determining that each waterbody candidate region that includes at least one of the water contours corresponds to a waterbody, ii. determining that each waterbody candidate region remaining after step i that is included in one of the non-water contours does not correspond to a waterbody, and iii. determining that each waterbody candidate region remaining after step ii corresponds to a waterbody.

In some embodiments, the LiDAR classes include a bridge class, the bridge class defines at least a subset of the plurality of contours named bridge contours, and determining whether each waterbody candidate region corresponds to a waterbody includes, between steps i and ii, removing each waterbody candidate region remaining after step i that is included in one of the bridge contours.

In yet a further aspect, a non-transitory computer-readable medium is provided. The computer-readable medium has instructions stored thereon which, when executed by one or more processors, cause the one or more processors to receive a LiDAR point cloud including a plurality of LiDAR points, the LiDAR point cloud representing a surface area including the water boundary, segment the LiDAR point cloud into a segmented point cloud, the segmented point cloud including the LiDAR points and assigning one of a plurality of LiDAR classes to at least a subset of the LiDAR points, the LiDAR classes including at least a ground class, define a plurality of contours, each contour from the plurality of contours being associated with a subset of the LiDAR points assigned to one of the plurality of LiDAR classes, define at least one waterbody candidate region based on the contours, each of the at least one waterbody candidate region being a region including contours associated with a subset of the LiDAR points not assigned to the ground class, compute a topological relation between each waterbody candidate region and each contour, thereby creating a set of topological relations corresponding to each waterbody candidate region, determine whether each waterbody candidate region corresponds to a waterbody based on the corresponding set of topological relations, and generate a water boundary mapping based on the determination.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment.
Figure 1 is a schematic of a system for performing water boundary mapping, in accordance with an embodiment.
Figure 2 is a flowchart of a method for performing water boundary mapping, in accordance with an embodiment.
Figures 3A to 3F are illustrations of work products of a system or method for performing water boundary mapping, in accordance with an example and an embodiment.

### DETAILED DESCRIPTION

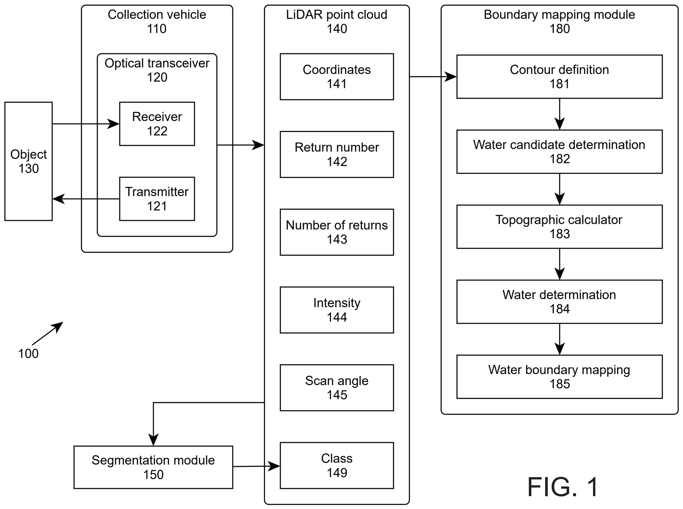

With reference to Figure 1, an exemplary system 100 for performing water boundary mapping is shown. Broadly described, the system 100 includes at least one collection vehicle 110 equipped with an optical transceiver 120 used to detect the surface of objects 130. A point cloud 140 is created, segmented by a segmentation module 150 and passed to a boundary mapping module 180, which processes it to create a water boundary mapping.

In exemplary system 100, the surveying can be performed by collection vehicles, i.e., vehicles equipped with sensing equipment. In some embodiments, the collection vehicles are airborne, and can include manned and/or unmanned aerial vehicles, such as airplanes and drones, and/or spatial vehicles, such as satellites.

Each collection vehicle 110 can be equipped with one or more sensors, including for instance active optical sensors such as optical transceivers 120. For instance, in airborne collection vehicles, one or more optical transceivers 120 can be mounted on an underside surface of the vehicle 110, such that it is directed towards the ground. Each collection vehicle 110 and/or each sensing apparatus 120 mounted thereon can include one or more positioning sensors, such as a global navigation satellite system including, e.g., Global Positoning System (GPS) sensors and/or Inertial Navigation System (INS) sensors.

Each optical transceiver 120 can include a transmitter 121, configured to emit an optical beam, e.g., towards objects and/or towards the ground, and a receiver 122, configured to detect the beam emitted by the transmitter 121 after it has been reflected, e.g., by objects and/or by the ground. In some embodiments, some or all the optical transceivers can correspond to LiDAR (Light Detection And Ranging) systems. A LiDAR system can include a LiDAR transceiver, which emits a laser pulse and detects one or more reflections of the pulse. As an example, a LiDAR transceiver emitting a pulse beam towards a tree can detect a reflection corresponding to foliage and a reflection corresponding to the ground. Each reflection is associated with a height, which can for instance be calculated from the pulse time of flight and the speed of light and/or by triangulation.

Whenever a receiver detects a reflection, point data is generated. The data corresponding to a plurality of points detected during one or more pass by one or more collection vehicle are combined in a point cloud 140, corresponding to an unstructured collection of point data. Point data from multiple sources can for instance be combined by performing a union operation. A point cloud can be stored on persistent storage, for instance using the LAS file format, as defined for instance in the LAS Specification 1.4 - R15 as revised on 9 July 2019 and published by the American Society for Photogrammetry & Remote Sensing.

Point data included in a point cloud 140 can for instance include tridimensional *x, y, z* coordinates 141, wherein coordinates *x* and y can correspond to geographic coordinates indicating the position where the reflection occurred and z can correspond to the altitude at which the reflection occurred. Additional point data can be acquired. As examples, using a LiDAR system, it is possible to acquire a return number 142, indicating that a reflection detection is the *n*'th reflection corresponding to a given laser pulse, a number of returns 143, corresponding to the total number of reflections detected with respect to the laser pulse that created the point, an intensity 144, indicating the return strength of the laser pulse, and a scan angle 145, indicating for instance the angle of the pulse with respect to the nadir of an airborne optical sensor. As an example, the coordinates 142 can correspond to three integers, the return number 142, number of returns 143 and intensity 144 can correspond to natural numbers, and the scan angle 145 can correspond to an integer. It can be appreciated that additional types of data can be acquired and stored about each point.

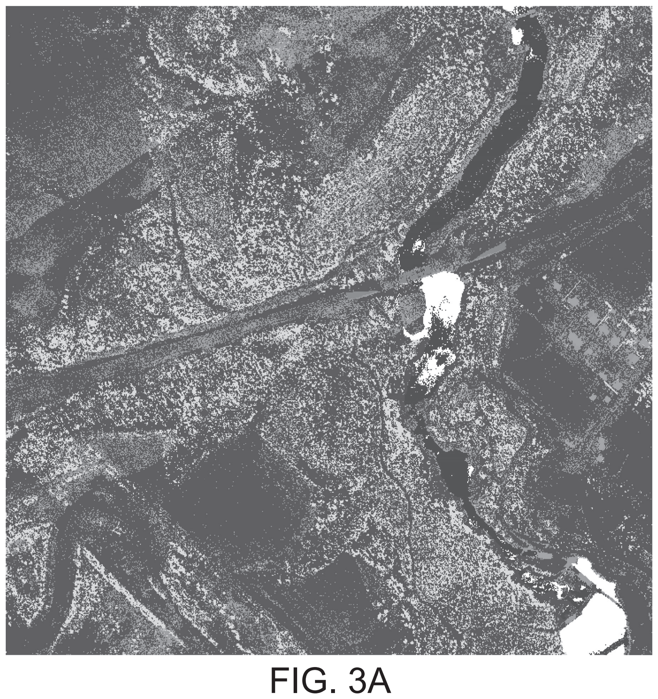

A LiDAR data segmentation module 150 can be provided to perform a segmentation of the LiDAR point cloud 140. In some embodiments, a semantic segmentation is performed, i.e., each point of the point cloud is assigned to one of a plurality of classes. As an example, two classes can be used, one corresponding to water points, indicating that the point represents a reflection of the beam on water, and one corresponding to ground points, indicating that the point represents a reflection of the beam on the ground. In some embodiments, additional classes can be used, e.g., vegetation, building and/or noise classes, as can be seen in Figure 3A, where water, ground, building and vegetation classes are used. Any suitable method can be used to perform the semantic segmentation of the point cloud 140. In some embodiments, conventional geometrical and/or manual classification approaches can be used. In some embodiments, the LiDAR data segmentation module 150 includes a neural network, for instance a deep learning network such as a convolutional neural network (CNN), trained to input LiDAR point data and output a predicted class 149 or a vector of class probabilities for each point. As an example, a network trained according to the approach described in European Patent No. 4 471 728 can be used.

In some embodiments, the segmentation module 150 is configured to perform multiple semantic segmentation. As an example, the segmentation module 150 can be configured to cut the LiDAR point cloud 140 in a number of tiles, for instance a configurable number of tiles, or the required number of tiles to obtain tiles of a configurable size. In some embodiments, each tile can include a buffer, such that two tiles can partially overlap. A number of transformed tiles can be created by using data augmentation, allowing for each tile to be semantically segmented multiple times by a neural network trained to output a corresponding segmented transformed tile based on an input transformed tile, and aggregate a plurality of segmented transformed tiles outputted by the neural network to create a final semantic segmentation result defining the segmented point cloud, also called classified point cloud because each point can be assigned a class 149.

System 100 is provided with a boundary mapping module 180 configured to perform the water boundary mapping based on a segmented LiDAR point cloud 140. Broadly described, the mapping module 180 includes submodules for contour definition 181, water candidate determination 182, topological calculations 183, water determination 184 and water boundary mapping 185.

The contour definition submodule 181 defines contours based on the LiDAR point cloud 140. The contours define zones of the LiDAR point cloud 140 associated with one or a specific subset of the possible classes. As an example, a contour can define a zone of the point cloud 140 including points that have all been classified in the "ground" class. Therefore, each contour is associated with a number of LiDAR points from the point cloud 140, i.e., with a subset of the LiDAR points. This contour associated with "ground" points can be referred to as a "ground contour". Other contours can for instance include points classified as "building" and be referred to as "building contours". It will be appreciated that any class that can be output by the segmentation module 150 can be associated with a number of contours, including for instance "vegetation contours", "water contours", "bridge contours", etc. As another example a contour can define a zone of the point cloud 140 including points that have not been classified in the "water" class, and be referred to as a "non-water contour". In some embodiments, "non-water contours" can include only contours defining zones of points not classified as either "water" or "unclassified". In some embodiments, any contour that is not a water contour can be referred to as a "non-water contour".

Contours can be tridimensional and for instance define solid figures based on the tridimensional coordinates of each associated LiDAR point, or can be bidimensional and for instance define polygons and/or α-shapes, for instance α-shapes as defined by Edelsbrunner, Kirkpatrick & Seidel. The solid figure, polygon and/or α-shape defined by a contour can be referred to as a contour solid figure, contour polygon and/or contour α-shape. In some embodiments, the z coordinates of LIDAR points can be disregarded to obtain bidimensional coordinates. In some embodiments, each LiDAR point can be projected on a plane, for instance, corresponding to a specific elevation. It will be appreciated that different approaches can be taken to define contours. As an example, each contour can correspond to the convex or concave hull of the associated LiDAR points. As another example, each contour can correspond to an α-shape defined by the associated LiDAR points. The surveyed area itself or of the area of interest in which water boundaries are to be mapped can also define a contour, for instance a contour associated with all the LiDAR points in the data cloud 140, and define, e.g., a solid figure and/or a polygon, for instance, a rectangular polygon as shown in Figure 3A.

The water candidate determination submodule 182 determines regions of the area that are candidates to correspond to a waterbody or a portion of a waterbody. As explained above, LiDAR points located inside a waterbody will not necessarily be classified as water by the segmentation module 150, for instance because a LiDAR point may correspond to vegetation or a bridge over water, possibly resulting in a vegetation or bridge classification, and/or because of inherent limitations of the LiDAR technology with respect to the reflectance properties of water, which can result in an unclassified point, e.g., a point assigned to the "unclassified" class. The set of the water candidate regions can correspond to a superset of the actual water regions, i.e., it is expected to include both water regions and false positives. The water candidate regions themselves define contours, and can therefore be characterized for instance as solid figures, polygons and/or α-shapes. The water candidate regions can be determined based on the difference between the area contours and certain specific contours. As an example, the water candidate regions can correspond to the difference between the area contour and all the ground contours. As another example, the water candidate regions can correspond to the difference between the area contour and all the ground and building contours. Because water candidate regions can be defined based on not being inside specific contours, they can be referred to as "holes", or "empty zones". In some embodiments, each water candidate region is connected, i.e., there exists a continuous path between any two points inside the region that does not pass outside the region. In other words, each water candidate region can correspond to a polygonal region, i.e., a polygon with no disjoint part.

The topological calculator 183 determined topological relation between contours. It can be appreciated that different sets or definitions of topological and/or geometric unary, binary, ternary and/or n-ary relations can be used to analyze contours, including for instance the relations defined in different qualitative algebras such as region connection calculi (RCC), e.g., RCC5 or RCC8, and/or topological models such as mereotopology and/or the Dimensionally Extended 9-Intersection Model (DE-9IM).

The topological relations used in the present disclosure are mostly based on set-theoretic notions by way of example. As an example, a contour X can be described as being included in a contour *Y,* which can be written Y⊆ *X,* if each point *x* in *X* is also in *Y,* i.e., *∀x, x* ∈ *X* → *x E Y,* or for all *x, x* being a member of *X* implies that *x* is a member of *Y.* Conversely, the contour *Y* can be described as including the contour *X.* If a contour *X* is included in a contour *Y* and the contour *Y* is included in the contour *X,* then *X* and *Y* can be said to be equivalent. As another example, a contour *X* can be described as intersecting and/or (partially) overlapping a contour *Y* if there is at least one point *x*₁ in *X* that is also in *Y* and at least one point *x*₂ in*X* that is not in Y, i.e., (∃*x*₁*, x*₁ ∈ *X* ∧ *x*₁ ∈ *Y*) ∧ (∃*x, x*₂ ∈ *X* ∧ *x*₂ ∉ *Y*). Conversely, two contours *X* and *Y* can be said to be disjoint if they have no point in common, i.e., *∀x, x* ∈ *X* → *x* ∉ *Y,* and/or if their intersection is empty, i.e. *X* ∩ *Y =* ∅. As a further example, contours can be used to define new contours. For instance, a contour Z including all points of contours *X* and *Y* can be defined as *Z = X* ∪ *Y*, or the union of *X* and *Y,* and a contour *T* including all points of contours *X* except those also in contour *Y* can be defined as *T = X \ Y,* or the subtraction of *Y* from *X.* In the present disclosure, set theoretical notations are extended such that, for instance *X* can represent the union of a number of contours. As an example, *T = X \ Y* can represent ∪ *Tᵢ* = ∪ *Xᵢ* \ ∪ *Yᵢ.*

As a more specific example, in some embodiments, the set of the water candidate regions *T* can be defined as the subtraction of the set of ground contours and/or building contours *P*₁ from the area contour *L,* i.e., *T = L \ P*₁*.* If *T* is defined as a single contour, there might be cases where it will define a disjoint polygon. In some embodiments, this is avoided by defining *T* as the set of water candidate regions *Tᵢ* such that ∪ *Ti = L \ P*₁ and that each individual *Tᵢ* is connected. In some embodiments, *T* is the smallest set of *Tᵢ* such that each individual *Tᵢ* is connected, advantageously saving computational resources by minimizing the amount of water candidate regions to be evaluated.

In some embodiments, the topological calculator 183 is configured to perform a pairwise comparison of all defined contours to determine which of a predefined closed set of possible binary relations apply between them and thereby create a set of topological relations. As a set theoretical example, the set of possible relations between *X* and *Y* can include *"X* and *Y* are equal", *"X* is included in *Y", "Y* is included in *X", "X* and *Y* intersect but neither is included in the other one" (which can be referred to as *"X* and *Y* intersect"), and *"X* and *Y* are disjoint". In some embodiments, only candidate water regions are compared to each contour that does not correspond to a candidate water region, advantageously saving computational resources by minimizing the number of comparisons that are to be performed. Nonetheless, this ensures that the set of topological relations includes an indication, for each respective waterbody candidate region and for each respective other contour, of whether the waterbody candidate region is included in the contour and of whether the contour is included in the waterbody candidate region.

The water determination submodule 184 uses the set of topological relations to determine whether each candidate water region corresponds to a waterbody. The water determination submodule 184 can be configured to determine whether a given candidate region is part of a waterbody based on a rule and/or a pattern, or a set of rules and/or of patterns observed in the set of topological relations. In some embodiments, the water determination submodule 184 is configured to implement a predefined algorithm and/or workflow, the algorithm and/or workflow including a series of steps such that, at each step, a condition is checked against one or more given topological relations and, based on a truth value of the condition, either a subsequent step is taken, or a determination is made as to whether one or more water candidate region corresponds to a waterbody. In some embodiments, the algorithm and/or workflow is performed once for each water candidate region, sequentially and/or parallelly. It can be appreciated that, to save on computing resources, a set of topological relations can be populated only as needed to perform the algorithm and/or workflow, such that any relation between two contours that is not required to make a determination needs not be computed. In some embodiments, relations are stored once computed in order to save processing time. In some embodiments, relations are not stored and recomputed as needed in order to save memory space.

As an example of algorithm, for each water candidate region: a first step can include checking for its relation against each water contour and, if the candidate region and a water contour intersect, determining that the candidate region corresponds to a waterbody; otherwise, a second step can include checking for its relation against each non-water contour and, if the candidate region is included in a non-water contour, determining that the candidate region does not correspond to a waterbody; otherwise, determining that the candidate region corresponds to a waterbody. As an extension on the example, if bridge contours exist, an intermediate step taken between the first and the second step can include checking for the relation of the candidate region against each bridge contour and, if the candidate region is included in a bridge contour, determining that it does not correspond to a waterbody. Whenever a determination has been made regarding one water candidate region, the algorithm can be stopped and the water determination module 184 can skip to the next candidate region, if any.

In some embodiments, if a determination has been made that one water candidate region does not correspond to a waterbody, it is removed from the list of water candidate regions such that, once each candidate region has been evaluated, the list of water candidate regions includes only candidate regions which correspond to waterbodies. In other words, the water candidate determination 182 can be configured initially to build a list of both regions corresponding to waterbodies and false positives, and the water determination submodule 184 can be configured to remove false positives from the list.

The water boundary mapping submodule 185 generates a detailed water boundary map based on the list of water candidate regions determined by the water determination module 184 to correspond to a waterbody. Upon receiving this list, with regions with predefined contours, the water boundary mapping submodule 185 can process the contour data to delineate the precise boundaries of each confirmed waterbody. By leveraging the segmented LiDAR point cloud 140, the submodule 185 refines these contours to produce an accurate representation of waterbody boundaries, ensuring that the generated map reflects the actual geographical extent of each waterbody with high precision. The water boundary mapping submodule 185 may additionally apply smoothing algorithms or contour adjustments to improve the clarity and continuity of boundary lines, ultimately outputting a water boundary map that can be readily used for visualization, analysis, or further processing.

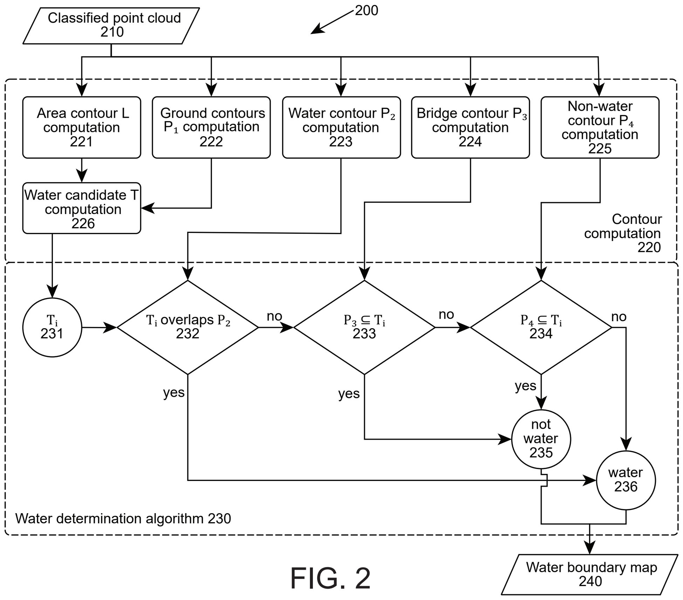

With reference to Figure 2, an exemplary method 200 for performing water boundary mapping is shown. Broadly described, the method 200 includes obtaining a classified point cloud 210, computing contours 220, performing an algorithm to determine water regions 230 and generating a water boundary map 240.

An initial step 210 includes obtaining a classified point cloud, i.e., a point cloud that has been semantically segmented. In some embodiments, a raw point cloud is obtained and step 210 includes performing semantic segmentation. In some embodiments, step 210 also includes acquiring the point cloud from LiDAR readings. In some embodiments, the point cloud and/or the classified point cloud is reduced to two dimensions, e.g., by stripping each point of its z coordinate. Figure 3A shows an illustration in accordance with an example case of a classified point cloud reduced to two dimensions, with dark gray indicating points classified as "ground", light gray indicating points classified as "building" or "bridge", very light gray indicating points classified as "vegetation", and black indicating points classified as "water". White indicates a lack of LiDAR data, which, as explained above, is a frequent occurrence over water.

Subsequent step 220 includes computing contours based on the point cloud and the class assigned to the points. Each contour can define, for instance, a polygon. Therefore, the contours can be referred to as polygon contours, and/or the polygons can be referred to as contour polygons. It can be appreciated that the method can be applied to bidimensional and tridimensional alternatives to polygons such as α-shapes and/or solid figures.

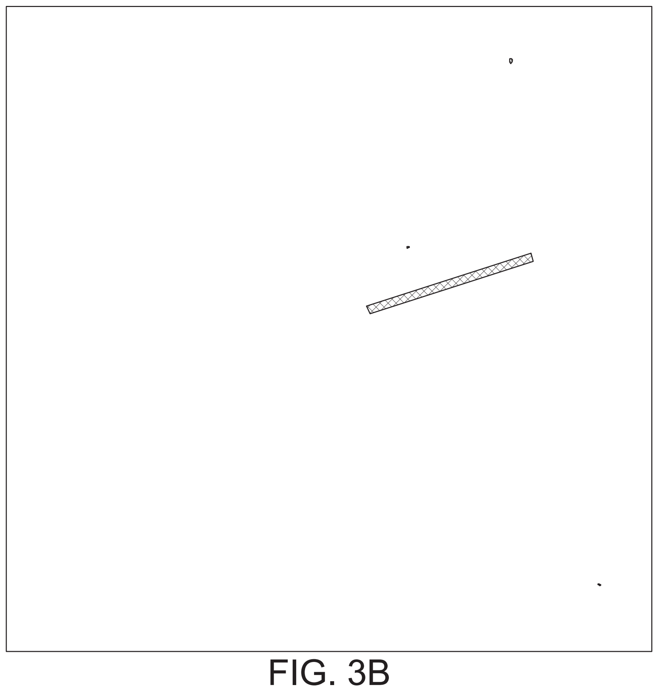

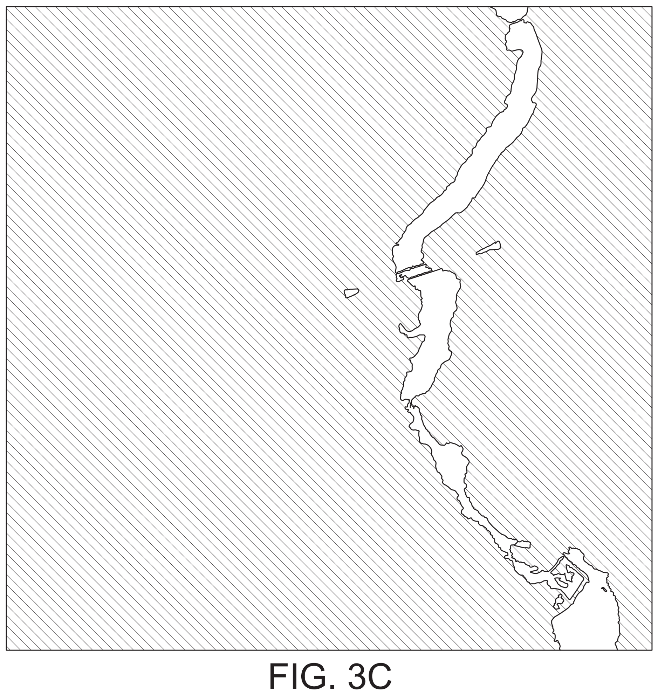

In substep 221, a contour *L* is computed to define the area corresponding to the point cloud. In substep 222, a set of contours *P*₁ is computed to define the zones including only points classified as "ground". In some embodiments, the set *P*₁ further includes the zones including only points classified as "building". In some embodiments, the set *P*₁ includes zones including only points classified into a subset of classes that are relevant to computing zones in which there is no waterbody, including for instance classes that are correlated with not corresponding to a waterbody or not being located atop a waterbody. Substeps 223, 224 and 225 can include respectively computing contours *P*₂ defining zones associated with "water" points, contours *P*₃ defining zones associated with "bridge" points, and contours *P*₄ defining zones associated with "non-water" points. Figures 3B and 3C respectively show illustrations in accordance with the example case of figure 3A of *P*₃ (lattice pattern) and *P*₄ (low-density diagonal hatch pattern), figure 3C being generated by an embodiment in which "non-water" points include "unclassified" points.

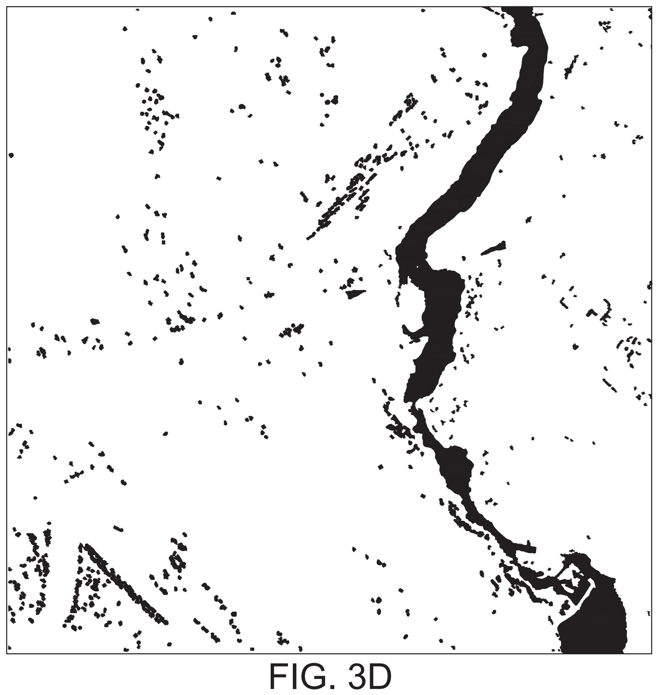

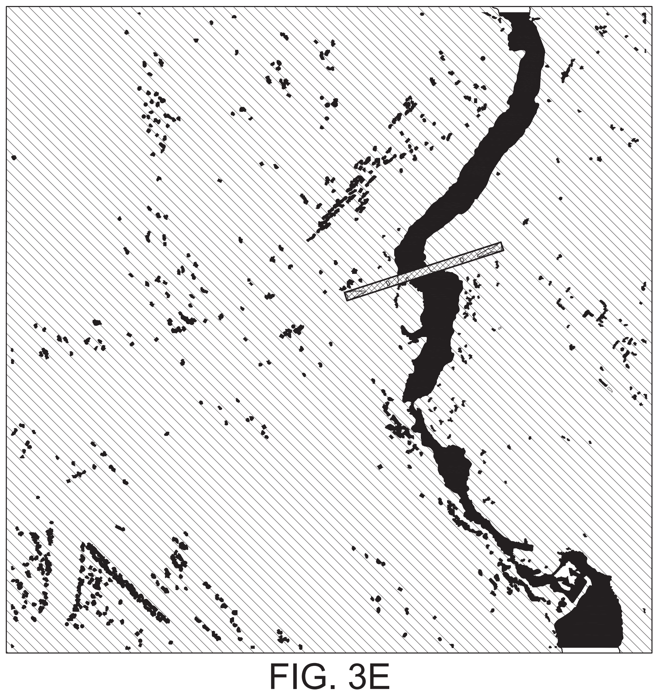

In substep 226, a set of contours *T* is computed to define the regions of the area corresponding to candidate water regions, i.e., which are to be assessed to determine whether they correspond to one or more waterbodies. The candidate water regions can be defined based on other contours that have been computed previously, for instance, based on the contours associated with "ground" points. In some embodiments, the candidate water regions can correspond to "holes" in the area with respect to a specific type of contour, such that each point of the point cloud is included either in a contour of the specific type or in a water candidate region. As an example, the set of contours of the candidate water regions *T* can correspond to a subtraction of *P*₁ from *L,* i.e., *T = L \ P*₁. Figures 3D and 3E respectively show illustrations of *T* (solid black) and of the superposition of *T, P*₃ and *P*₄ in accordance with the example case of Figure 3A.

*T* can include zero, one or a plurality of water candidate region contours *Tᵢ* and corresponds to the union of these contours, i.e., *T* = ∪ *Tᵢ*. The contours *Tᵢ* can be segmented from *T* based on connectedness. For instance, the set *T* can correspond to the set of *Tᵢ* with the smallest possible cardinality where each *Tᵢ* is connected.

Once *T* has been determined, step 230 can be performed for each *Ti* ∈ *T.* Therefore, is there is no water candidate region, i.e., *T* = ∅ or |*T*| = 0, step 230 can be skipped and the water boundary map can be drawn based on the fact that the area includes no waterbody. If there is only one water candidate region, i.e., |*T*| = 1, step 230 can be performed only once. If there is a plurality of water candidate regions, i.e. |*T*| > 1, step 230 can be performed once for each *Tᵢ* ∈ *T.* Step 230 can be defined as performing an algorithm and/or a workflow checking for relations between *Tᵢ* and other computed contours.

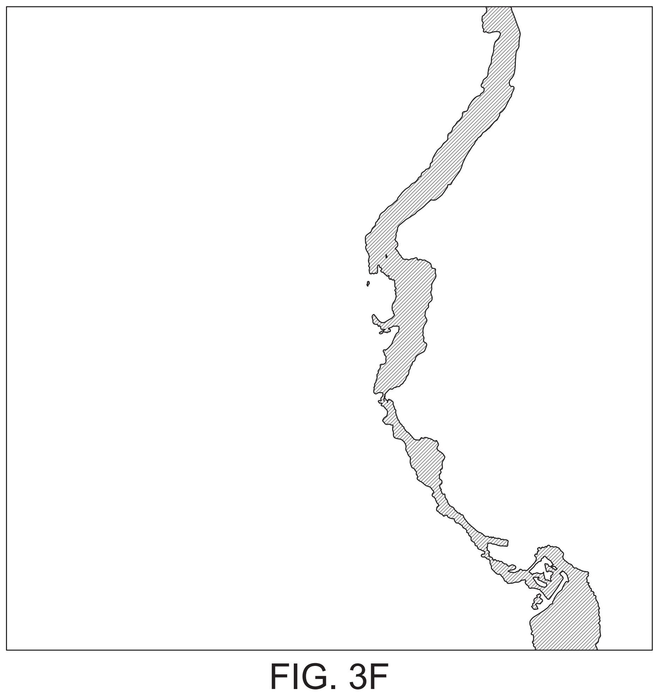

As an example only, an algorithm to determine water candidate regions corresponding to one or more waterbody can be as described hereafter. The algorithm can start with taking the next *Tᵢ* in substep 231. A first test can be performed in substep 232 to check whether there is an overlap between *Tᵢ* and the contours of water points, e.g., whether *Tᵢ* and *P*₂ overlap. This can be expressed formally, for instance using set theoretical notations as *Tᵢ* ∩ *P*₂ ≠ *ø* ∧ *Tᵢ \P*₂ ≠ ∅ ∧ *P*₂*\Tᵢ ≠* ø, or using RCC5 relations as *PO*(*Tᵢ, P*₂). If the test is true, then the algorithm can stop in substep 236 with a determination that *Tᵢ* corresponds to a waterbody. If the test is false, a second test can be performed in substep 233 to check whether *Tᵢ* is included in a bridge contour, e.g., whether *Tᵢ* is included in *P*₃ or in a contour *C* ∈ *P*₃. This can be expressed formally, for instance as *P*₃ ⊆ *Tᵢ* or ∃*C,C* ∈ *P*₃ ∧ *C* ⊆ *Tᵢ*, or as *PP*(*Tᵢ,P*₃). If the test is true, then the algorithm can stop in substep 235 with a determination that *Tᵢ* does not correspond to a waterbody, i.e., that *Tᵢ* is a false positive. If the test is false, a third test can be performed in substep 234 to check whether *Tᵢ* is included in a non-water contour, e.g., whether *Tᵢ* is included in *P*₄ or in a contour C ∈ *P*₄*.* This can be expressed formally, for instance as *P*₄ ⊆ *Tᵢ* or *3C, C* ∈ *P*₄ ∧ C ⊆ *Tᵢ,* or as *PP*(*Tᵢ,P*₄). If the test is true, then the algorithm can stop in substep 235 with a determination that *Tᵢ* does not correspond to a waterbody. If the test is false, then the algorithm can stop in substep 236 with a determination that *Tᵢ* corresponds to a waterbody. Figure 3F shows an illustration of *T* with false positive removed (tight diagonal hatch pattern) by performing the water determination algorithm 230 in accordance with the example case of Figure 3A.

It can be appreciated that substeps of steps 220 and 230, and their substeps, need not necessarily be performed sequentially and/or in a specific order. Rather, they can be performed in any order and/or in parallel, in accordance with satisfying data dependencies indicated by arrows in the exemplary flowchart of Figure 2. As an example only, substep 225 need not be completed until substep 234 is started for the first time, and substep 225 need not be performed at all before there is an indication that substep 234 is to be performed. Therefore, in some embodiments, some substeps such as substep 234 are not performed until there is an indication that a substep dependent on the output such as substep 234 is to be performed, advantageously reducing processing time.

Once each *Tᵢ* ∈ *T* has been processed, the set of candidate water regions corresponding to one or more waterbody, i.e., the set of contours *T* with false positive removed, is known and can be used, along with the point cloud, to generate a water boundary map in final step 240.

One or more systems, methods, modules or submodules, steps or substeps, or functionalities described herein may be implemented in computer programs executed on one or more processing devices, each including at least one processor, a data storage system (including volatile and/or non-volatile memory and/or storage elements), and optionally at least one input and/or output device. These processing devices encompass a broad range of electronic systems capable of receiving, processing, and/or transmitting data. Examples of processing devices include, without limitation, general-purpose computers, specialized computing devices, and embedded systems. Processing devices may be implemented on dedicated hardware, including programmable hardware such as field-programmable gate arrays (FPGAs), or as software-based solutions on cloud computing platforms or serverless architectures.

Processing devices suitable for implementing the present invention may include programmable logic units, mainframe computers, servers, personal computers, laptops, cloud-based systems, personal digital assistants (PDAs), cellular telephones, smartphones, wearable devices, tablets, video game consoles, and portable video game devices. Each of these devices has the ability to execute instructions and can operate individually or in combination to perform the functionality described. The processing devices may be deployed in a variety of configurations, from single-device implementations to distributed systems that involve multiple devices collaborating to achieve a common purpose. For example, a method could be implemented on a single microcontroller in an embedded system, or distributed across a network of servers that share computational tasks.

The instructions that enable a processing device to perform a given method or function can be stored in the form of a computer program. This computer program may be implemented in a high-level programming language, such as an imperative language, including procedural or object-oriented languages like C++, Java, or Python, which are suited for a wide range of applications and can easily interface with various system components. High-level programming languages can also include declarative languages, such as functional languages like Haskell or logic languages like Prolog, which allow developers to specify what the program should accomplish rather than describing step-by-step operations. These high-level languages can improve development efficiency and code readability.

Alternatively, computer programs may be implemented in low-level languages, such as assembly or machine code, especially when direct hardware control or optimization is required. Low-level languages are closer to machine instructions and provide precise control over hardware resources, which can be advantageous in resource-constrained environments, such as embedded systems. Programs written in low-level languages can be used in applications that require high performance, small memory footprints, or real-time processing capabilities.

Each computer program may be either compiled or interpreted. Compiled languages, such as C or C++, can be transformed into machine code optimized for a specific hardware configuration, allowing efficient execution. Compilation can result in highly optimized executables that are tailored to the underlying architecture, which is advantageous in performance-critical applications. Interpreted languages, such as Python or JavaScript, offer flexibility by interpreting code at runtime. This allows for rapid development and platform independence, as the same code can be run on different systems with minimal modifications. Hybrid approaches, such as Java bytecode or .NET Common Intermediate Language (CIL), combine elements of both compiled and interpreted paradigms. In these cases, code is compiled to an intermediate representation that can be executed by a virtual machine on various platforms, providing cross-platform compatibility.

Each computer program implementing the methods or systems described herein is preferably stored on a computer-readable storage medium or device. Examples of such storage media include hard drives, solid-state drives, optical disks, flash memory, and magnetic tape. The computer-readable storage medium is readable by a general or special-purpose programmable computer, which, upon reading the instructions, can configure itself to perform the steps described herein. These instructions may include executable code, scripts, or markup that instructs the computer on how to operate and handle data, making the system or method functional. In some embodiments, the system or method may be embedded within an operating system running on a programmable computer, allowing for deeper integration with the hardware and enabling enhanced performance, security, or user interface features.

Processing devices implementing the present invention may contain a variety of hardware components that support program execution. Processors used within these devices include general-purpose central processing units (CPUs), which are capable of executing a wide variety of instructions, as well as specialized processors. Examples of specialized processors include graphics processing units (GPUs), which can be optimized for parallel processing and/or used in data-intensive applications like machine learning, digital signal processors (DSPs), which are designed for handling real-time audio, video, and other signal processing tasks, and application-specific integrated circuits (ASICs), which are tailored to specific functions and are often used in applications requiring high efficiency. Multicore and/or multithreaded processors can allow for concurrent execution of multiple tasks, improving overall performance, for instance in multi-user or real-time environments.

The processing device may further include various types of memory. Volatile memory, such as registers, cache, and random-access memory (RAM), can be used for temporary data storage during active program execution, providing fast access to data that the processor frequently uses. Non-volatile memory, such as read-only memory (ROM), flash memory, solid-state drives, hard disks, and optical disks, can be used to retain data even when the processing device is powered off, making it suitable for long-term data storage. Other examples of non-volatile storage media include diskettes, magnetic tapes, chips, and compact disks, among others. The type of memory selected can depend on specific requirements, such as the need for rapid access, data retention, or data durability under power cycling. The memory configuration of a processing device can be adjusted to support varying levels of computational demand, from lightweight applications with minimal memory requirements to complex systems requiring large data caches.

Networking solutions within a processing device enable inter-process communication and network communication over wired or wireless connections. Examples of networking technologies include Ethernet for high-speed wired connections, Wi-Fi for wireless data transmission, Bluetooth for short-range device communication, and cellular networks for broader geographic coverage. These networking solutions support various network topologies, including local area networks (LAN), wide area networks (WAN), and other network types such as personal area networks (PAN) and metropolitan area networks (MAN), as well as the Internet. Through these networks, processing devices can communicate with one another to distribute tasks, share data, and collaborate on complex computations. This communication can occur within a single building or across geographically dispersed locations, depending on the application requirements.

Implementing networking security measures can be advantageous to protect data as it travels across potentially vulnerable channels. Key security principles can include confidentiality, integrity, and availability. Confidentiality can be achieved for instance through encryption protocols like Secure Sockets Layer (SSL) and Transport Layer Security (TLS), ensuring that data remains private. Integrity can be maintained for instance with cryptographic hashing and/or digital signatures, which can detect tampering, while availability can be protected for instance by redundancy, load balancing, and defences against denial-of-service (DoS) attacks. Access control mechanisms, including multifactor authentication and role-based access control, can be used to regulate network access. Network segmentation, such as virtual LANs (VLANs) and demilitarized zones (DMZs), can be implemented to limit access to sensitive areas and reduces the impact of breaches, while firewalls filter traffic based on predefined rules, providing an essential barrier between internal and external networks.

Advanced security measures for networking can be implemented, for instance, including encryption for wireless networks through protocols like Wi-Fi Protected Access 3 (WPA3), which can prevent unauthorized access to Wi-Fi. Intrusion detection and prevention systems (IDS/IPS) can be used to monitor network traffic for malicious activity, while virtual private networks (VPNs) can be used to establish secure connections for remote access over public networks. Regular security assessments, such as penetration testing and vulnerability scanning, identify weaknesses, and security information and event management (SIEM) systems may be leveraged to provide real-time insights into potential threats. A layered security approach, or defence in depth, can combine multiple controls across different levels of the network, enhancing resilience against both internal and external attacks by creating multiple barriers that attackers must overcome.

Distributed computing is a common implementation in which multiple processing devices work together to perform tasks described herein. For example, a method or a method step may execute within a single thread on one processing device or be distributed across multiple threads, cores, or processors on a single device or across multiple devices. Distributed computing can help implement parallelization, where tasks are split into smaller subtasks that are processed concurrently, significantly improving processing speed and efficiency. This approach is well suited to applications with high computational demands, such as data analysis, machine learning, and large-scale simulations. In some implementations, processors are located within a single physical location, while in others, they may be spread across multiple sites, allowing for redundant and resilient computing infrastructures.

The systems and methods described herein may also be distributed in one or more computer program products, each including a computer-readable medium that bears computer-usable instructions for one or more processors. These instructions can exist in various forms, including compiled and non-compiled code, providing the flexibility needed for deployment in diverse computing environments. For example, compiled binaries may be optimized for specific hardware, while interpreted scripts or markup files can be deployed in environments where cross-platform compatibility or rapid updates are needed.

The storage and retrieval of data in a computer system may involve various data storage solutions, including relational databases, which store data in structured tables with defined relationships, and NoSQL databases, which offer more flexible storage schemas suited to unstructured or semi-structured data. In-memory databases, which store data entirely in RAM for rapid access, can also be used in applications where low latency is desirable. These data storage solutions may be implemented on local servers, within distributed storage systems, or as part of cloud-based infrastructures, offering scalability and accessibility as required by the application. Distributed storage solutions can enable high availability and fault tolerance, ensuring that data remains accessible even if one part of the storage infrastructure fails.

Input and output devices connected to the processing device can facilitate interaction with users and other systems. Input devices can include standard peripherals, such as keyboards, mice, touchscreens, and microphones, as well as specialized input devices, such as biometric scanners, cameras, and sensors for capturing environmental data. Output devices may encompass monitors, printers, speakers, projectors, and other display systems that present information to users in various formats. These input and output devices enable users to interact with the system in intuitive ways, supporting diverse functionalities from user control of applications to data visualization and multimedia output.

The systems and methods described herein are thus capable of deployment across a broad spectrum of computing environments, supporting applications from simple embedded systems to large-scale distributed computing networks. Each component and approach described herein contributes to the versatility and adaptability of the invention, making it suitable for a wide variety of practical implementations across industries and use cases.

The disclosed neural network implementations may be realized through various configurations of computer hardware, software, or a combination of both, depending on the requirements and constraints of the particular application. For instance, the neural networks may leverage specialized hardware, such as GPUs, tensor processing units (TPUs), FPGAs, and ASICs, which are designed to efficiently handle the high computational demands of training and deploying neural networks. These hardware components are particularly advantageous for accelerating matrix operations, which are central to neural network computations, and can significantly reduce the time needed for training large models and performing inference tasks.

Alternatively, neural networks can be implemented using traditional computer hardware, including CPUs, which are versatile and widely available. While CPUs are not optimized specifically for neural network computations, they can still handle smaller models and less computationally intensive tasks effectively. In cases where flexibility is essential, such as in general-purpose computing environments, implementing neural networks on CPUs allows for integration with other software systems without the need for specialized hardware.

On the software side, neural networks can be created using various programming languages and frameworks. High-level languages such as Python, Java, and C++ are commonly used for neural network development, particularly in conjunction with deep learning libraries and frameworks like TensorFlow, PyTorch, Keras, and Theano. These frameworks provide prebuilt functions, modules, and tools that simplify the process of designing, training, and deploying neural networks. They allow developers to define network architectures, optimize training parameters, and manage data flows with relative ease. For instance, TensorFlow and PyTorch offer extensive support for GPU and TPU integration, enabling seamless transitions between hardware and software environments.

Neural networks implemented in software may also vary based on the type of language and runtime environment used. For example, imperative languages such as Python and Java allow developers to create neural networks using clear, step-by-step procedural code, making the design process intuitive and manageable. Alternatively, functional languages like Lisp and Haskell may also be employed to build neural networks, particularly when focusing on functional aspects of data flow and transformation. Moreover, neural networks can be implemented in either compiled or interpreted languages, where compiled languages, such as C++ or Java, can offer improved execution speed, while interpreted languages like Python provide flexibility and ease of development.

In certain configurations, neural networks may be deployed in distributed computing environments, allowing for parallel processing across multiple processing units or even across different geographic locations. Distributed implementations can be achieved through cloud computing platforms or high-performance computing (HPC) systems, where workloads are split among numerous machines to improve efficiency and scalability. This is particularly useful for training large-scale models that require significant processing power and storage capacity. Distributed computing frameworks such as Apache Spark and Horovod can facilitate the parallelization of neural network computations, enabling large datasets and complex models to be processed in a fraction of the time that would be required on a single machine.

Neural network implementations may also employ hybrid configurations that combine both hardware and software elements. For example, the core neural network computations might be performed on dedicated hardware accelerators like GPUs or TPUs, while the overall system, including data preprocessing and post-processing steps, can be managed by general-purpose software running on CPUs. This hybrid approach optimizes performance by leveraging the strengths of both hardware and software environments, ensuring efficient resource utilization across different components of the system.

Furthermore, it is understood that the neural networks described herein are not limited to any specific type of architecture. Various neural network architectures, including but not limited to convolutional neural networks (CNNs), recurrent neural networks (RNNs), long short-term memory (LSTM) networks, transformers, and generative adversarial networks (GANs), may be implemented depending on the task requirements. These architectures can be tailored to perform tasks such as image recognition, natural language processing, and predictive modelling, each benefiting from different configurations of hardware and software resources to optimize performance.

For secure and reliable deployment, neural networks may also incorporate mechanisms for data integrity, confidentiality, and robustness against adversarial attacks. Security protocols, such as data encryption and access control, may be applied to safeguard sensitive data processed by the neural network. Techniques like differential privacy and secure multiparty computation can be employed to protect data confidentiality during training and inference. Additionally, the implementation may include error-handling mechanisms and redundancy measures to ensure robust operation, even in environments where hardware failures or software bugs may occur.

Overall, the neural networks in this disclosure may be implemented as flexible, scalable systems that leverage combinations of hardware and software elements tailored to the needs of specific applications. This approach provides versatility, allowing the neural networks to be deployed in a wide range of environments, from dedicated hardware systems to virtualized cloud platforms, thereby supporting a diverse set of use cases and performance requirements.

In this disclosure, unless the context explicitly requires otherwise, the term "comprise" and its variations, such as "comprises" and "comprising," are intended to be interpreted in an inclusive manner. This means that the presence of specified features or elements does not exclude the possibility of additional features, elements, or steps being included in various embodiments.

Any reference to prior art publications within this disclosure should not be taken as an acknowledgment or admission that these publications form part of the common general knowledge in the relevant field, whether in any particular jurisdiction or globally.

The examples provided in the above description serve to illustrate specific embodiments and convey certain features and principles. However, those skilled in the art will recognize that individual features, elements, and functionalities within the disclosed embodiments may be adapted, modified, or combined in numerous ways without departing from the core spirit or intended scope of the described subject matter. Therefore, the foregoing description is meant to be illustrative rather than limiting, with the scope being defined by the appended claims, which are intended to encompass all variations and modifications within the broadest interpretation permitted by applicable law.

## Claims

1. A computer-implemented method for performing water boundary mapping, the method comprising:
receiving a LiDAR point cloud comprising a plurality of LiDAR points, the LiDAR point cloud representing a surface area including the water boundary;
segmenting the LiDAR point cloud into a segmented point cloud, the segmented point cloud comprising the LiDAR points and assigning one of a plurality of LiDAR classes to at least a subset of the LiDAR points, the LiDAR classes comprising at least a ground class;
defining a plurality of contours, each contour from the plurality of contours being associated with a subset of the LiDAR points assigned to one of the plurality of LiDAR classes;
defining at least one waterbody candidate region based on the contours, each of the at least one waterbody candidate region being a region including contours associated with a subset of the LiDAR points not assigned to the ground class;
computing a topological relation between each waterbody candidate region and each contour, thereby creating a set of topological relations corresponding to each waterbody candidate region;
determining whether each waterbody candidate region corresponds to a waterbody based on the corresponding set of topological relations; and
generating the water boundary mapping based on the determination.

2. The method of claim 1, comprising the step of acquiring the point cloud by at least one aerial collection vehicle each equipped with at least one LiDAR optical transceiver, each LiDAR optical transceiver comprising at least a transmitter configured to send a laser beam towards an object and a receiver configured to detect a reflection of the laser beam on the object, the at least one LiDAR optical transceiver of the at least one aerial collection vehicle being configured to create point data based on the reflection of the beam, the point data corresponding to the LiDAR point cloud.

3. The method of claim 1 or 2, wherein the contours define a corresponding plurality of contour polygons, each contour defining a corresponding contour polygon.

4. The method of claim 3, wherein each contour corresponds to one of:
a convex hull of the subset of the LiDAR points associated to the contour;
a concave hull of the subset of the LiDAR points associated to the contour; and
an α-shape of the subset of the LiDAR points associated to the contour.

5. The method of claim 3 or 4, wherein the area defines an area polygon, and wherein a subtraction of the contour polygons associated with the ground class from the area polygon defines at least one waterbody candidate region.

6. The method of claim 5, wherein the LiDAR classes comprise a building class, wherein the area defines an area polygon, and wherein a subtraction of the contour polygons associated with the ground and building classes from the area polygon defines the at least one waterbody candidate region.

7. The method of claim 5 or 6, wherein all of the at least one waterbody candidate region are connected to one another.

8. The method of any one of claims 1 to 7, wherein:
the plurality of LiDAR classes comprise a water class and non-water classes;
the water class defines at least a subset of the plurality of contours named water contours; and
the non-water classes define at least a subset of the plurality of contours named non-water contours, and
wherein the set of topological relations comprises at least an indication, for each respective waterbody candidate region from the at least one waterbody candidate region and for each respective contour of the plurality of contours, of whether the respective waterbody candidate region is included in the respective contour, of whether the respective contour is included in the respective waterbody candidate region, and of whether the respective waterbody candidate region and the respective contour overlap.

9. The method of claim 8, wherein determining whether each waterbody candidate region corresponds to a waterbody comprises:
i. determining that each waterbody candidate region that includes at least one of the water contours corresponds to a waterbody;
ii. determining that each waterbody candidate region remaining after step i that is included in one of the non-water contours does not correspond to a waterbody; and
iii. determining that each waterbody candidate region remaining after step ii corresponds to a waterbody.

10. The method of claim 9, wherein:
the LiDAR classes comprise a bridge class;
the bridge class defines at least a subset of the plurality of contours named bridge contours; and
determining whether each waterbody candidate region corresponds to a waterbody comprises, between steps i and ii, removing each waterbody candidate region remaining after step i that is included in one of the bridge contours.

11. A system for performing water boundary mapping, the system comprising:
at least one aerial collection vehicle each equipped with at least one LiDAR optical transceiver, each LiDAR optical transceiver comprising at least a transmitter configured to send a laser beam towards an object and a receiver configured to detect a reflection of the laser beam on the object, the at least one LiDAR optical transceiver of the at least one aerial collection vehicle being configured to create point data based on the reflection of the beam, the point data corresponding to a LiDAR point cloud;
a segmentation module configured to segment the LiDAR point cloud into a segmented point cloud, the segmented point cloud comprising the LiDAR points and assigning one of a plurality of LiDAR classes to at least a subset of the LiDAR points, the LiDAR classes comprising at least a ground class, the segmentation module comprising a neural network receiving the LiDAR point cloud as input and trained to output the corresponding segmented point cloud; and
a boundary mapping module configured to:
define a plurality of contours, each contour from the plurality of contours being associated with a subset of the LiDAR points assigned to one of the plurality of LiDAR classes,
define at least one waterbody candidate region based on the contours, each of the at least one waterbody candidate region being a region including contours associated with a subset of the LiDAR points not assigned to the ground class,
compute a topological relation between each waterbody candidate region and each contour, thereby creating a set of topological relations corresponding to each waterbody candidate region,
determine whether each waterbody candidate region corresponds to a waterbody based on the corresponding set of topological relations, and
generate the water boundary mapping based on the determination.

12. The system of claim 11, wherein the contours define a corresponding plurality of contour polygons, each contour defining a corresponding contour polygon.

13. The system of claim 12, wherein each contour corresponds to one of:
a convex hull of the subset of the LiDAR points associated to the contour;
a concave hull of the subset of the LiDAR points associated to the contour; and
an α-shape of the subset of the LiDAR points associated to the contour.

14. The system of claim 11 or 12, wherein the area defines an area polygon, and wherein a subtraction of the contour polygons associated with the ground class from the area polygon defines at least one waterbody candidate region.

15. The system of claim 14, wherein the LiDAR classes comprise a building class, wherein the area defines an area polygon, and wherein a subtraction of the contour polygons associated with the ground and building classes from the area polygon defines the at least one waterbody candidate region.
